# EUROPÄISCHE PATENTSCHRIFT

(11) **EP 2 594 509 B1**
(45) Veröffentlichungstag und Bekanntmachung des Hinweises auf die Patenterteilung: **31.12.2014**
(21) Anmeldenummer: 12193662.9
(22) Anmeldetag: 21.11.2012
(51) Int. Cl.: B65G 9/00, H01H 21/00, G01D 7/00

(54) **Hängeförderer und Belegt-Wippe dafür**
Overhead conveyor and lever detector for such conveyor
Transporteur suspendu et bascule de détection pour ce transporteur

(30) Priorität: 21.11.2011 DE 102011119410
(43) Veröffentlichungstag der Anmeldung: 22.05.2013
(73) Patentinhaber: SSI Schäfer Peem GmbH, 8051 Graz (AT)
(72) Erfinder: Winkler, Max, 8010 Graz (AT)
(74) Vertreter: Witte, Weller & Partner Patentanwälte mbB

(56) Entgegenhaltungen:
- WO-A1-2006/104444
- WO-A1-2008/069680
- US-A- 4 114 538

## Beschreibung

Die vorliegende Erfindung betrifft eine universell einsetzbare Belegt-Wippe, mit der in einer Hängeförderanlage detektiert werden kann, ob eine Staustrecke vollständig gefüllt (belegt) ist. In diesem Fall ist die Staustrecke besetzt bzw. belegt und kann nicht weiter gefüllt werden. Eine Belegt-Wippe gemäß der Erfindung kommt z.B. zum Einsatz, wenn Hängewaren sortiert und auf sog. Abwurfstangen abgegeben werden. Ab einer bestimmten Position auf dieser Stange muss eine Besetzt- bzw. Belegtmeldung ausgegeben werden, da die Strecke ansonsten volllaufen würde und es mit der weiterhin auf einer Hauptstrecke vorbeifahrenden Hängeware zur Kollision kommen könnte. Bei einer anderen Anwendung wird die Hängeware in bzw. mit einem staufähigen (Hänge-)Förderer transportiert und gestaut. Bei einer noch anderen Anwendung wird die Hängeware in einen nicht staufähigen Förderer getaktet eingefahren, d.h. stromabwärts bewegt. Hier muss die Ankunft der Hängeware an einem stromabwärts gelegenen Ende des Förderers erkannt werden, da dann an einem stromaufwärts gelegenen Ende keine weitere Hängeware mehr in den Förderer eingefahren werden darf.

Herkömmlicherweise setzt man Lichtaster ein, um diese Belegtfunktion zu realisieren. Die Lichttaster werden in einem Bereich angeordnet, wo ihr ausgesendeter Lichtstrahl von der hängenden Ware in den Lichttaster zurückreflektiert und anschließend detektiert wird. Lichttaster haben aber den generellen Nachteil, dass sie nicht auf alle Farben reagieren, was insbesondere in der Modebranche schlecht ist. Wenn die Hängeware also eine bestimmte Farbe hat, kann es sein, dass kein oder nur ein unzureichender Lichtstrahl reflektiert wird, so dass trotz eines Belegtzustands kein Belegtsignal erfasst, erzeugt und ausgegeben wird. Ein weiterer Nachteil bei Lichttastern ist, dass Bedienpersonal unter den senkrecht ausgerichteten Lichttastern herlaufen oder sogar darunter stehenbleiben kann. Der Hängeförderer befindet sich üblicherweise in Überkopfhöhe. In diesem Fall gibt die Steuerung eine falsche Meldung aus, da sie keine Hängeware, sondern die Bedienperson erfasst.

Es gibt natürlich auch mechanische Lösungen. Als mechanische Lösung kommen z.B. Wippen zum Einsatz. Mechanische Wippen haben den Nachteil, dass sie durch ihr Eigengewicht ggf. die zu stauende Hängeware nicht passieren lassen. Wenn die Wippe z.B. bei einer geneigten Abwurfstange eingesetzt wird, auf der die Hängeware zu einem tiefer liegenden Sammelpunkt auf der Stange rutscht, können sehr leichtgewichtige Hängeware, die möglicherweise generell schon schlecht rutschen, die Wippe nicht anheben, um die Wippe passieren zu können. In diesem Falle stoppt die (leichte) Hängeware an der Wippe und gelangt nicht in den eigentlichen Staubereich, der stromabwärts zur Wippe liegt.

Ein weiterer Nachteil herkömmlicher mechanischer Wippen ist, dass jede Wippe auf die konkrete Anwendung angepasst und eingestellt werden muss. Speziell in der Bekleidungsindustrie gibt es verschiedene Behängungsseiten. In einigen Ländern wird die Hängeware von links auf die Fördertechnik gehängt und fährt somit "Brust voraus" (Behängeseite links). In anderen Ländern wird die Fördertechnik von rechts behangen (Behängeseite rechts). In Abhängigkeit von der Breite der Hängeware (in Förderrichtung gesehen), müssen die geometrischen Längen der Wippen an die zu stauenden Hängewaren angepasst werden. Dies führt dazu, dass unter Umständen bis zu 10 und mehr unterschiedliche Wippenlängen bevorratet werden müssen. Dies ist im Zuge der Standardisierung und Lagerhaltung ein riesiger Nachteil. Es stellt auch eine Fehlerquelle bei der Planung einer Anlage dar. Deshalb wird oft auf die elektrisch betätigten Lichttaster zurückgegriffen, obwohl dort die eingangs genannten Nachteile vorliegen.

Das Dokument DE 20 2005 013 125 U1 offenbart eine Vorrichtung zum Umformen eines Behälterstroms inklusive einem, um eine horizontale Achse schwenkbar angeordneten, Schaltbügel mit einem im Wesentlichen horizontal verlaufenden Endbereich, der mit einer Schaltfahne starr verbunden ist, die ihrerseits einen berührungslosen Sensor betätigt. Die Anordnung ist derart, dass der Schaltbügel beim Aufliegen auf Köpfen von dicht an dicht passierenden Flaschen in seiner oberen Endstellung gehalten wird, während er beim Passieren von Lücken zwischen aufeinanderfolgenden Flaschen nach unten schwenkt und dadurch über den Sensor ein Steuersignal auslöst.

Das Dokument US 5,058,750 B offenbart eine Sortiereinrichtung für eine Hängeförderanlage.

Das Dokument US 4,114,538 A offenbart eine Wippe mit einem Körper, der zur Drehung um einen Stift ausgestaltet ist. Ein unteres Ende des Körpers ist mit einem Arm ausgestaltet, das obere Ende des Körpers setzt den Arm in Längsrichtung fort und befindet sich in Ruhestellung zwischen einem Reflektor und einer Fotozelle. Bei einer Betätigung des Arms wird das obere Ende des Körpers ausgelenkt und ein Signal erzeugt.

Es ist daher eine Aufgabe der Erfindung, eine verbesserte universell einsetzbare Belegt-Wippe zu schaffen.

Diese Aufgabe wird gelöst durch eine Belegt-Wippe zur Anzeige eines Belegtzustands einer Staustrecke für hängende Fördergüter, wobei die Staustrecke stromabwärts an die Wippe angrenzt, wobei eine Vielzahl von Fördergütern aktiv oder passiv hängend stromabwärts transportiert, wobei jedes Fördergut an einem Bügel hängt, aufweisend: ein Abfrage-Schwert mit einem länglichen Körper, dessen Längserstreckung ein erstes und ein gegenüberliegendes zweites Ende aufweist, wobei im Körper eine durchgehende Öffnung vorgesehen ist, die vorzugsweise näher zum zweiten Ende als zum ersten freien Ende angeordnet ist, wobei das Schwert innerhalb eines Bereichs angeordnet ist, der von den Fördergütern durchquert wird, wenn die Fördergüter die Wippe passieren; und ein Lager, das eine, vorzugsweise horizontal orientierte, Buchse aufweist, die durch die Öffnung des Schwerts hindurch greift und auf der das Schwert in einem Normalzustand, wenn das Schwert nicht mit einem Bügel in Kontakt ist, nach unten hängend aufliegt, wobei das Schwert um die Buchse schwenkbar gelagert ist, um im Belegtzustand durch ein gestautes Fördergut dauerhaft angehoben zu sein. Das Schwert weist entlang der Längsrichtung beabstandet verteilte, rippenförmige Schlitze auf, die eine Anpassung einer Länge des Schwerts durch Abbrechen eines unerwünschten Teils des Schwerts zulassen.

Die Wippe gemäß der Erfindung ist modular aufgebaut. Das Schwert der Wippe kann sowohl links als auch rechts relativ zu einer Abwurfstange, aber auch relativ zu einem Förderer angeordnet werden. Somit ist es unerheblich, von welcher Seite die Fördergüter auf die Fördertechnik gehangen werden. Die Wippe ist einfach zu montieren und kann vor Ort angepasst werden, z.B. was die Länge des Schwerts betrifft.

Gemäß einer bevorzugten Ausführungsform weist die Wippe ferner eine Fahne auf, die mit dem zweiten Ende des Schwerts verbunden ist und die das Schwert in der Längsrichtung fortsetzt.

Die Fahne hat mehrere Funktionen. Die Fahne kann zur Anbringung eines Ausgleichsgewichts eingesetzt werden, um das effektive Gewicht des Schwerts zu reduzieren, welches auf passierende Bügel wirkt. Die Fahne kann ferner als Auslöser für einen (Näherungs-) Sensor eingesetzt werden.

Vorzugsweise weist die Fahne ein Langloch auf, das sich entlang der Längsrichtung des Schwerts erstreckt.

Das Langloch ermöglicht ein einfaches Verschieben eines Ausgleichsgewichts zur schnelleren Einstellung eines Zustands, bei dem die Fahne und das Schwert nahezu im Gleichgewicht sind, wobei das Gewicht des Schwerts überwiegt.

Insbesondere weist das Schwert oder die Fahne eine, vorzugsweise kreisbogenförmige, Ausnehmung auf, die koaxial zur Buchse angeordnet ist. Die Ausnehmung kann mit einem ortsfesten Stift zusammenwirken, der dann wiederum die maximale Auslenkung des Schwerts begrenzt, so dass das Schwert immer sicher in seine Nulllage zurückkehrt und auch immer sicher bei dem Durchgang eines Bügels ausgelenkt wird bzw. bleibt.

Bei einer weiteren besonderen Ausgestaltung ist das das Schwert oder die Fahne ausgebildet, mit einem Näherungssensor wechselzuwirken, der erfasst, ob das erste freie Ende des Schwerts aufgrund eines Kontakts mit einem stillstehenden Bügel dauerhaft nach oben ausgelenkt ist.

Der Näherungssensor ist so angeordnet, dass das Bedienpersonal problemlos unter der Wippe bzw. dem Belegtmelder durchlaufen kann, ohne den Sensor auszulösen. Der Sensor wird allein durch das Schwert oder die Fahne ausgelöst, welches üblicherweise überkopfhoch angeordnet ist.

Bei einer anderen Ausgestaltung weist die Wippe ferner ein Gestell auf, an dem der Näherungssensor und das Lager befestigt sind, wobei das Gestell an der Staustrecke befestigbar ist und wobei die Buchse so angeordnet ist, dass das Schwert seitlich, horizontal versetzt zur Staustrecke angeordnet ist.

Der Näherungssensor ist Teil der Wippe und kann als eine Einheit ausgeliefert werden, so dass auf der Baustelle das Schwert von der richtigen Seite auf das Lager montiert werden muss.

Vorzugsweise ist ferner ein Stift vorgesehen, der insbesondere in horizontaler Orientierung quer, vorzugsweise senkrecht, zur Längsrichtung der Staustrecke am Gestell ortsfest angebracht ist, der in die kreisbogenförmige Ausnehmung eingreift und so die maximale Auslenkung des Schwerts begrenzt.

Der Körper des Schwerts ist insbesondere plattenförmig ausgebildet.

Des Weiteren wird ein Hängeförderer mit einer Staustrecke offenbart, an deren stromaufwärtigem Ende die erfindungsgemäße Belegt-Wippe vorgesehen ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht einer "freien" Wippe (Fig. 1A) gemäß der Erfindung und eine Seitenansicht einer "besetzten" Wippe (Fig. 1B) gemäß der Erfindung;
- Fig. 2: einen Schleppförderer mit einer Wippe gemäß der Erfindung in einer Seitenansicht (Fig. 2A) und in einer Vorderansicht (Fig. 2B), wenn man in einer Förderrichtung stromaufwärts auf die Wippe schaut;
- Fig. 3: einen Klinkenförderer mit einer Wippe gemäß der Erfindung in einer Seitenansicht (Fig. 3A) und in einer Vorderansicht (Fig. 3B);
- Fig. 4: ein Schwert einer Wippe gemäß der Erfindung in einer Seitenansicht (Fig. 4A), einer vergrößerten Detailansicht (Fig. 4B) innerhalb eines Kreises, der in Fig. 4A mit B bezeichnet ist, und einen Schnitt entlang der Linie IV-C - IV-C (Fig. 4C);
- Fig. 5: eine Fahne der Wippe gemäß der Erfindung in einer Seitenansicht (Fig. 5A) und in einer Draufsicht (Fig. 5B); und
- Fig. 6: ein Lager der Wippe gemäß der Erfindung in einer Seitenansicht (Fig. 6A) und in einer Vorderansicht (Fig. 6B).

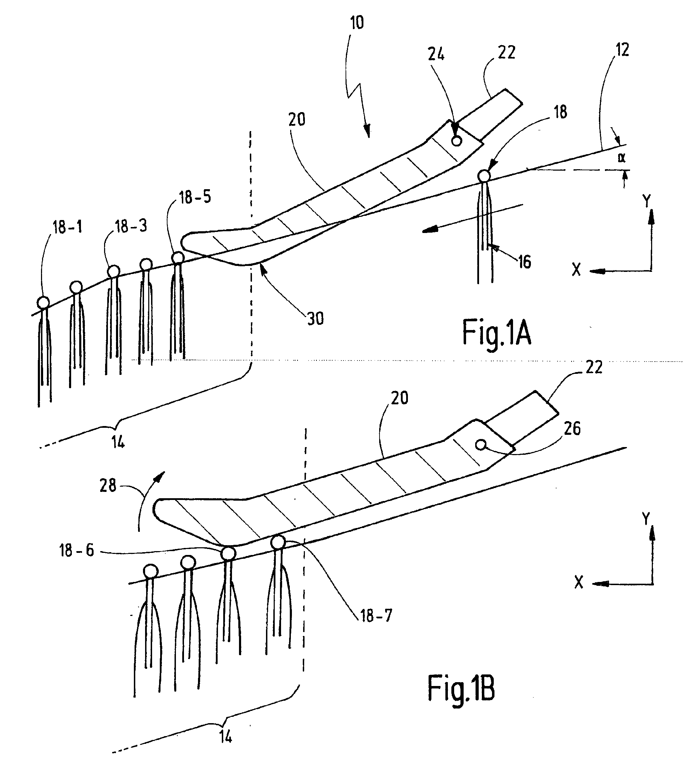

Die Fig. 1A zeigt eine Seitenansicht einer "freien" Wippe 10 gemäß der vorliegenden Erfindung. Die Wippe 10 kommt hier bei einer Abwurfstange 12 zum Einsatz, die wiederum Teil einer Hängeförderanlage sein kann. Abwurfstangen 12 werden insbesondere zu Sortierzwecken eingesetzt, indem die Abwurfstangen 12 seitlich zu einer Hauptförderstrecke angeordnet werden, wobei Fördergüter 16 aus der Hauptstrecke in bzw. auf die entsprechenden Abwurfstangen 12 ausgeschleust werden. Die Abwurfstangen 12 sind üblicherweise leicht gegenüber der Horizontalen geneigt. Dies ist in der Fig. 1A durch einen Winkel α angedeutet. Aussortierte Fördergüter 16, rutschen selbstständig, d.h. lediglich aufgrund der Schwerkraft, auf der Stange 12 nach unten, wie es durch einen nach links orientierten Pfeil angedeutet ist. Die Abwurfstange 12 kann zum Sammeln verschiedener Fördergüter 16 benutzt werden, die z.B. in Übereinstimmung mit einem Kommissionierauftrag auf die entsprechende Abwurfstange 12 ausgeschleust wurden. Die Fördergüter 16 (z.B. Kleidungsstücke) hängen üblicherweise an Bügeln 18. Je mehr Fördergüter 16 auf die Abwurfstange 12 ausgeschleust werden, desto mehr Fördergüter 16 sammeln sich an und werden aufgestaut. Da die Abwurfstange 12 eine begrenzte Kapazität hat, füllt sich die Abwurfstange 12 stetig bis zu einem gewissen Punkt, wo keine weiteren Fördergüter 16 mehr aufgenommen werden können, ohne eine Kollision der aufgestauten Fördergüter 16 mit solchen Fördergütern 16 zu riskieren, die auf der Hauptförderstrecke transportiert werden. In der Fig. 1A ist mit dem Bezugszeichen 14 eine Staustrecke (Bereich auf der Abwurfstange 12) angedeutet, dessen stromaufwärts gelegenes Ende durch eine vertikal orientierte Punktlinie angedeutet ist. In der Fig. 1A sind bereits fünf Fördergüter 16 in der Staustrecke 14 gesammelt. Es ist noch ein wenig Platz für weitere Fördergüter 16, bis das stromaufwärtige Ende der Staustrecke 14 erreicht ist.

Um den Füllzustand der Staustrecke 14 erfassen zu können, wird die Wippe 10 gemäß der Erfindung eingesetzt. Die Wippe 10 weist ein (Abfrage-) Schwert 20 auf. Die Wippe 10 kann eine Fahne 22 aufweisen, die sich vorzugsweise gegenüberliegend zum Schwert 20 erstreckt. Das Schwert 20 ist um eine Schwenkachse 24 drehbar gelagert, die durch ein (Gleit-)Lager 26 realisiert ist (vgl. auch Fig. 1B). Das Schwert 20 (und die Fahne 22) drehen in den Figuren 1A und 1B im Uhrzeigersinn um die Schwenkachse 24, sobald auch der verbleibende Restplatz in der Staustrecke 14 mit weiteren Fördergütern 16 belegt ist, wie es in der Fig. 1B angedeutet ist. Die Seitenansicht der Fig. 1B zeigt die Abwurfstange 12 mit der Wippe 10 der Fig. 1A zu einem späteren Zeitpunkt. Zwei weitere Fördergüter 16 haben zu diesem Zeitpunkt die Staustrecke 14 aufgefüllt. Diese zwei neuen Fördergüter 16 sorgen dafür, dass das Schwert 20 angehoben ist und eine Schwenkbewegung 28 durchführt hat, wie es in der Fig. 1B durch einen Pfeil angedeutet ist. Ein tiefster Punkt 30 einer Kontur des Schwerts 20 (vgl. Fig. 1A) wird dabei über das Niveau der Abwurfstange 12 angehoben. Das Schwert 20 dreht sich dabei im Uhrzeigersinn. Gleiches gilt für die Fahne 22, die relativ zur Schwenkachse 24 dem Schwert 20 gegenüberliegen kann. Die Fahne 22 kann benutzt werden, um eine in den Figuren 1A und 1B nicht näher gezeigte Sensorik zu aktivieren, die wiederum den gefüllten Zustand der Staustrecke 14 erfasst und ein entsprechendes Signal an einen übergeordneten (nicht dargestellten) Materialflussrechner ausgibt.

Es versteht sich, dass durch die Länge des Schwerts 20 die Länge der Staustrecke 14 beeinflussbar ist. Es versteht sich auch, dass die Länge des Schwerts 20 von der Breite der Fördergüter 16 in der X-Richtung abhängig ist. Wenn die Fördergüter 16 (in der X-Richtung) sehr breit sind, ist der Relativabstand zwischen benachbarten Bügeln 18 entsprechend groß. So ist es vorstellbar, dass bei einem sehr großen Abstand benachbarte Bügel 18 die Wippe 10 bzw. dessen Schwert 20 nicht ausgelenkt werden, weil das Schwert 20 in dem Raum zwischen dem benachbarten Bügel 18 greift, ohne selbst angehoben zu werden, obwohl die Staustrecke 14 bereits gefüllt ist. Dies bedeutet im Umkehrschluss, dass die Länge des Schwerts 20 immer größer wird, je breiter die zu stauenden Fördergüter 16 sind. Die Länge des Schwerts 20 kann bei der vorliegenden Erfindung aber auf einfache Weise eingestellt werden, indem das Schwert 20 auf der Baustelle zurechtgeschnitten wird, wie es nachfolgend noch detaillierter erläutert werden wird. Zu diesem Zweck weist das Schwert 20 z.B. regelmäßig beabstandete Schlitze 78 auf, die quer zur Längsrichtung des Schwerts 20 orientiert sind.

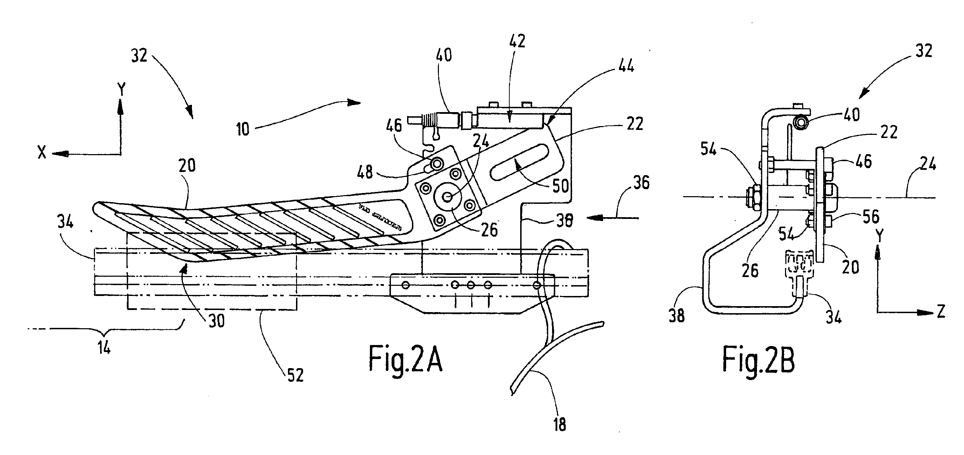

Die Figuren 2A und 2B zeigen die Wippe 10 mit einem Schleppförderer 32, der die Bügel 18 auf einer Transportschiene 34 in einer Transportrichtung 36 transportiert. Fig. 2A zeigt eine Seitenansicht und Fig. 2B zeigt eine Vorderansicht, wenn man in der Förderrichtung 36 stromaufwärts auf die Wippe 10 blickt. Der nachfolgende Teil der Beschreibung bezieht sich gemeinsam auf die Figuren 2A und 2B.

Die Wippe 10 weist ein Gestell 38 auf, welches im vorliegenden Fall z.B. einen C-förmigen Querschnitt (vgl. Fig. 2B) aufweist, um insbesondere die Komponenten 20, 22 und 26 der Wippe 10 seitlich zur Transportschiene 34 zu positionieren. Das Gestell 38 kann auch zum Halten der Transportschiene 34 eingesetzt werden.

Die Wippe 10 weist des Weiteren einen Sensor 40 in Form eines Näherungsschalters bzw. Näherungssensors 42 auf, der ebenfalls am Gestell 38 angeordnet ist. Der Näherungssensor 42 verwendet einen oder mehrere Sensoren, die auf eine Annäherung, d.h. insbesondere ohne direkten Kontakt, vorzugsweise berührungsfrei, reagieren. Näherungsschalter werden in der Hängefördertechnik zur Positionserkennung (hier z.B. der Fahne 22) sowie als Auslöser von Sicherheitsmaßnahmen eingesetzt. Es gibt verschiedene Arten von Näherungsschaltern. Es gibt induktive Näherungsschalter, die sowohl bei ferromagnetischen als auch bei nicht magnetischen, aber metallischen Gegenständen auf das Auftreten eines Wirbelstroms reagieren. Es gibt kapazitive Näherungsschalter, die auch auf nicht leitende Werkstoffe reagieren. Es gibt magnetische Näherungsschalter (z.B. Reedschalter oder Reedkontakte), die auf ein Magnetfeld reagieren. Es gibt optische Näherungsschalter, die auf Lichtreflexion reagieren. Ferner gibt es Lichtschranken. Ultraschall-Näherungsschalter empfangen Reflexionen eines Ultraschallsignals. Bei elektromagnetischen Näherungsschaltern ändert sich bei einer Annäherung eine Schwingfrequenz eines Schwingkreises, so dass man sowohl auf leitende als auch auf nicht leitende Werkstoffe reagieren kann.

Im vorliegenden Beispiel der Fig. 2 reagiert der Näherungssensor 42 z.B. induktiv auf eine obere Ecke 44 der Fahne 22. Es versteht sich, dass die Fahne 22 nicht zwingend erforderlich ist. Wenn die Fahne 22 nicht Teil der Wippe 10 ist, könnte der Näherungssensor 42 in einem Bereich angeordnet sein, so dass der Näherungssensor 42 mit dem Schwert 20 wechselwirkt. Es versteht sich, dass auch Sensoren verwendet werden können, die auf Berührung reagieren.

Die Wippe 10 der Fig. 2 weist ferner einen Stift 46 auf. Der Stift 46 ist horizontal orientiert und am Gestell 38 befestigt. Der Stift 46 greift in eine Ausnehmung 48 im Schwert 20. Die vorzugsweise kreisbogenförmige Ausnehmung 48, die koaxial zur Schwenkachse 24 angeordnet ist, begrenzt die maximal möglichen Auslenkungen des Schwerts 20. In der Fig. 2A ist die Wippe 10 bzw. deren Schwert 20 in einer "freien" Stellung (vgl. Fig. 1A) gezeigt, in welcher das Schwert 20 unter ein Förderniveau der Bügel 18 (hier Oberseite der Transportschiene 34) hängt. Der Stift 46 stößt an den rechten Rand der Ausnehmung 48 an, die der Stift 46 durchgreift. Auf diese Weise wird verhindert, dass das Schwert 20 senkrecht nach unten durchhängt. Der rechte Rand der Ausnehmung 48 definiert also eine Normallage. Der linke Rand der Ausnehmung 48 begrenzt die maximal mögliche Auslenkung des Schwerts 20, wenn ein Bügel 18 das Schwert 20 passiert und somit anhebt. In der Praxis kann es passieren, dass die Bügel 18 mit sehr hoher Geschwindigkeit befördert werden, so dass ein hoher Energieübertrag auf das Schwert 20 während einer Passage des Bügels 18 erfolgen kann. Um zu verhindern, dass das Schwert 20 im oberen Bereich der Wippe 10 (z.B. senkrecht nach oben stehend) verharrt und nicht mehr in seine Messstellung bzw. Nulllage zurückkehrt, begrenzt der linke Rand der Ausnehmung 48 diesen Fehlerzustand.

Die Fahne 22 kann ein Langloch 50 aufweisen, welches zur Aufnahme eines Tarierungsgewichts (nicht dargestellt) geeignet ist. Das Langloch 50 erstreckt sich vorzugsweise in der Längsrichtung des Schwerts 20. Um das effektiv auf einen Bügel 18 wirkende Gewicht des Schwerts 20 zu verringern, kann ein Ausgleichsgewicht (nicht dargestellt) im Langloch 50 so angeordnet werden, dass nur noch ein Bruchteil des Gewichts des Schwerts 20 auf die Bügel 18 wirkt. Ähnlich wie bei einer herkömmlichen Pendelwaage werden in diesem Fall auf Seiten der Fahne 22 so viele Gewichte angebracht, bis nahezu ein Gleichgewicht entsteht, wobei die Seite des Schwerts 20 - relativ zur Schwenkachse 24 - weiterhin schwerer ist.

Das Schwert 20 ist mit seinem tiefsten Punkt 30 der Kontur des Schwerts 20 in einem Passage-Bereich 52 angeordnet, der immer von den passierenden Bügeln 18 durchquert wird und zu einer Anhebung des Schwerts 20 führt, wenn einer der Bügel 18 das Schwert 20 passiert.

Sowohl der Stift 46 als auch das Lager 26, auf dem das Schwert 20 und die Fahne 22 frei drehbar ruhen, können mit Gewinden versehen sein, um über Muttern 46 mit dem Gestell 38 ortsfest verbunden zu werden. Das Schwert 20 und die Fahne 22 können über Mutter-Schrauben-Verbindungen 54, 56 starr miteinander verbunden sein. Das Schwert 20 und die Fahne 22 können alternativ auch einstückig ausgebildet sein.

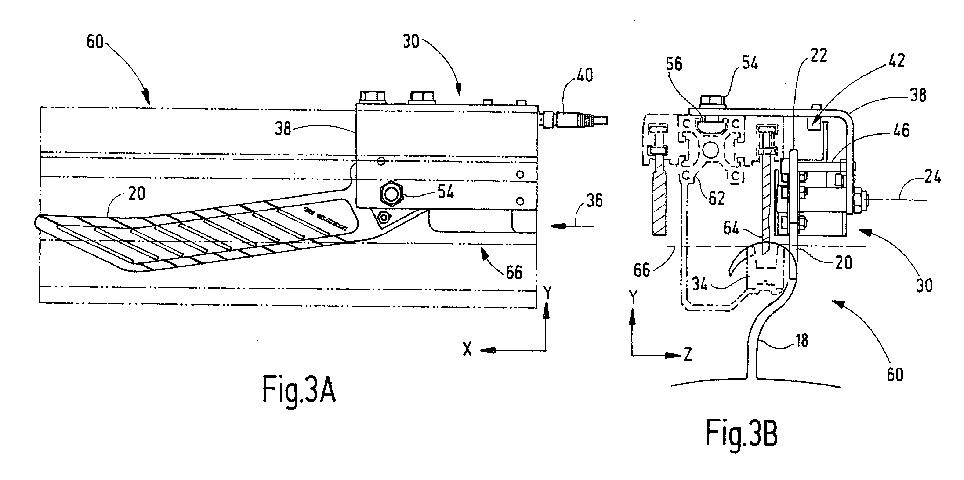

Unter gemeinsamer Bezugnahme auf die Figuren 3A und 3B wird nachfolgend der Einsatz einer Wippe 10 bei einem Klinkenförderer 60 erläutert. Der Klinkenförderer 60 weist ein Halteprofil 62 auf, an welchem ein (nicht dargestellter) Förderstrang (z.B. Förderkette) geführt wird. Der Klinkenförderer weist eine Vielzahl von Klinkenmitnehmern 64 auf, die auf einer Transportschiene 34 aufliegende Bügel 18 transportiert (Fig. 3B). Das Schwert 20 der Wippe 10 ist derart seitlich zur Transportschiene 34 angeordnet, dass ein passierender Bügel 18 das Schwert 20 sicher auslenkt. Das Schwert 20 liegt auf einer Höhe des Förderniveaus 66 der Bügel 18.

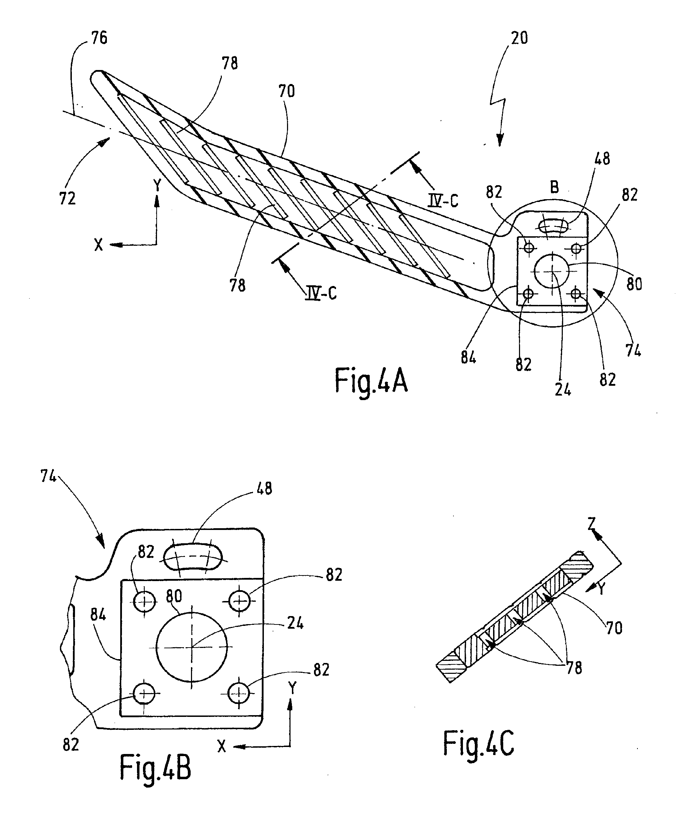

Unter gemeinsamer Bezugnahme auf die Figuren 4A bis 4C wird nachfolgend ein Schwert 20 der Wippe 10 in isolierter Form erläutert werden. Fig. 4A zeigt eine Seitenansicht. Die Fig. 4B zeigt den in der Fig. 4A mit einem Kreis "B" umrandeten Bereich in einer vergrößerten Darstellung. Die Fig. 4C zeigt einen Schnitt entlang der Linie IV-C / IV-C durch einen Körper 70 des Schwerts 20.

Der Körper 70 des Schwerts 20 weist ein erstes Ende 72 und ein zweites Ende 74 auf, das in einer Richtung einer Längserstreckung 76 des Körpers 70 im ersten Ende 72 gegenüberliegt. Das erste Ende 72 ist das freie Ende des Schwerts 20 und dient zur Abfrage der Bügel 18. Das zweite Ende 74 dient zur Aufnahme des Lagers 26. Ein wesentlicher Teil des Körpers 70 ist plattenförmig mit quer zur Längsrichtung 76 verlaufenden, vorzugsweise gleichmäßig beabstandeten, durchgehenden Schlitzen 78 (vgl. Schnitt der Fig. 4C) ausgebildet und erstreckt sich vom freien Ende 72 in Richtung des zweiten Ende 74. Die Form, die Lage und die Orientierung der Schlitze 78 kann beliebig variiert werden. Die Schlitze 78 ermöglichen eine einfache und schnelle Anpassung der Länge des Schwerts 20 während einer Montage der Wippe 10 auf der Baustelle. Nicht benötigte Längen des Körpers 70 können z.B. im Bereich der Schlitze 78 einfach abgebrochen oder weggeschnitten werden.

Im Bereich des zweiten Ende 74 geht der plattenförmige Körper 70 in einen nicht näher bezeichneten Verbindungs- und Lagerbereich über, der in der Fig. 4B vergrößert dargestellt ist. Dieser Bereich umfasst eine Öffnung 80, die zur Aufnahme des Lagers 26 ausgebildet und angepasst ist. Ferner sind exemplarisch vier weitere Öffnungen 82 vorgesehen, die zur Verbindung des Schwerts 20 mit der Fahne 22 dienen. Ein durch ein Quadrat angedeuteter Bereich 84 stellt eine Kontaktfläche des Schwerts 20 mit der Fahne 22 dar.

Die Ausnehmung 48 ist koaxial zur Schwenkachse 24 angeordnet. Es versteht sich, dass die Ausnehmung 48 nicht zwingend kreisförmig ausgebildet sein muss. Von Bedeutung sind lediglich die Ränder der Ausnehmung 48 in Umfangsrichtung, weil diese die maximale Auslenkung des Schwerts 20 zusammen mit dem Stift 46 begrenzen.

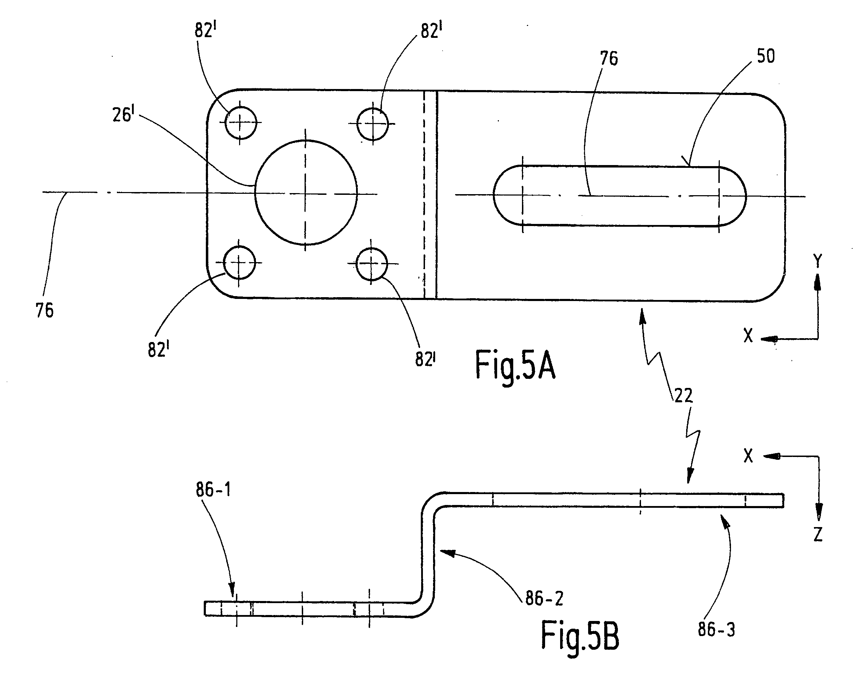

Unter gemeinsamer Bezugnahme auf die Figuren 5A und 5B wird nachfolgend eine mögliche Ausgestaltung einer Fahne 22 beschrieben. Fig. 5A zeigt eine Seitenansicht der Fahne 22. Fig. 5B zeigt eine Draufsicht der Fahne 22.

In der Draufsicht der Fig. 5B ist eine Z-förmige Ausgestaltung der Fahne 22 gut zu erkennen. Die Fahne 22 weist einen ersten Schenkel 86-1 und einen dritten Schenkel 86-3 auf, die in der Längsrichtung X orientiert sind und über einen zweiten Schenkel 86 miteinander verbunden sind, der wiederum in der Querrichtung Z orientiert ist. Es versteht sich, dass die Fahne 22 auch ohne den zweiten Schenkel 86-2 auskommt, so dass sich die Fahne 22 dann nur in der Längsrichtung X erstreckt. Andere Ausrichtungen sind ebenfalls möglich.

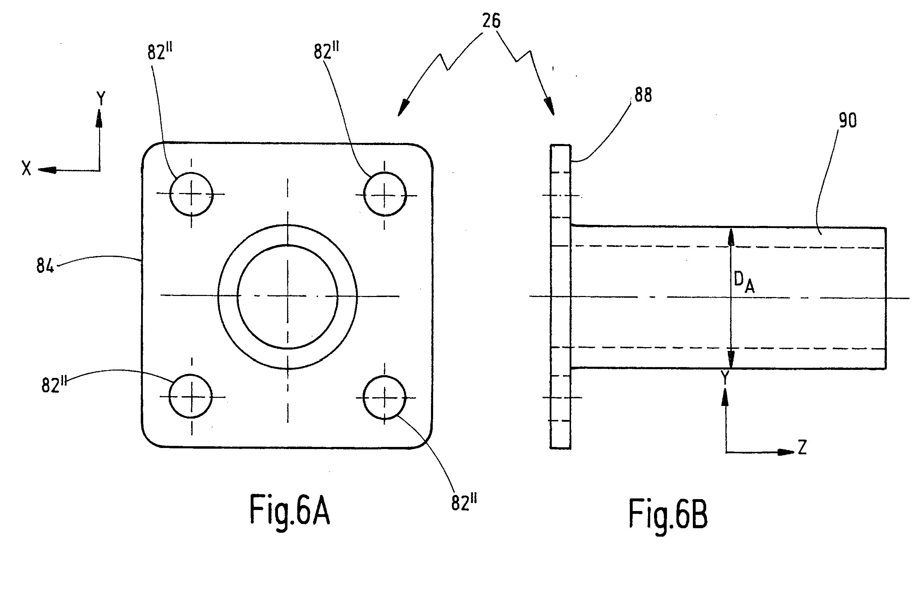

Fig. 6A zeigt eine Seitenansicht des Lagers 26. Fig. 6B zeigt eine Vorderansicht des Lagers 26, wenn man in der Förderrichtung 36 stromaufwärts (oder stromabwärts) auf das Lager 26 blickt.

Das Lager 26 weist eine Basisplatte 88 und eine vorzugsweise senkrecht dazu orientierte Buchse 90 auf. Die Basisplatte 88 kann weitere Öffnungen 82" aufweisen, die so angeordnet sind, dass sie mit den Öffnungen 82 und 82' des Schwerts bzw. der Fahne 22 übereinstimmen, um das Schwert 20, die Fahne 22 und die Basisplatte 88 über Mutter-Schrauben-Verbindungen 54-56 starr miteinander zu verbinden. In diesem Fall ist das rechte Ende der Buchse 90 (vgl. Fig. 6B) frei drehbar im Gestell 38 gelagert.

Aus der Zusammenschau der Figuren 4 bis 6 ergibt sich, dass das Schwert 20 universell auf beiden Seiten einer Förderstrecke einsetzbar ist. Die Anwendungsfälle aus den Figuren 2 und 3 zeigen das Schwert auf der rechten Seite (vgl. Figuren 2B und 3B). Es versteht aber, dass durch einfaches Umstecken des Lagers 26 relativ zum Schwert 20 auch eine links ausgerichtete Anordnung des Schwerts 20 relativ zur Förderstrecke möglich ist. Diese Ausrichtung kann auch erst während der Montage auf der Baustelle festgelegt ausgeführt werden. Es gibt in diesem Sinne keine "linken" und "rechten" Wippen 10. Die Wippe 10 gemäß der Erfindung ist baukastenartig aufgebaut und universell einsetzbar. Das Schwert 20 ist in diesem Sinne symmetrisch aufgebaut, so dass das Lager 26 von beiden Seiten hindurchgesteckt werden kann. Die eingangs erwähnte Problematik hinsichtlich der Behängeseite ergibt sich nicht. Gleichzeitig wird die Möglichkeit geschaffen, die Wippe 10 sowohl mit Abwurfstangen 12 als auch mit angetriebenen Förderern 32 und 60 einzusetzen.

Um den unterschiedlich benötigten Längen des Schwerts 20 gerecht zu werden, hat ein Basismodell des Schwerts 20 eine maximale Länge. Diese Länge wird vorzugsweise in regelmäßigen Abständen durch die Schlitze 78 perforiert, so dass auf der Baustelle aus einer möglicherweise zu langen Wippe 10 eine passende Wippe 10 auf einfache Weise hergestellt werden kann. Das Problem eines zu hohen Eigengewichts des Schwerts 20 (ungewollte Aufstauung zu leichter Fördergüter 16) lässt sich mit der Fahne 22 lösen, indem dort zusätzliche Ausgleichsgewichte angebracht werden.

Bei der oben stehenden Beschreibung der Erfindung wurden gleiche Teile und Merkmale mit gleichen Bezugszeichen versehen, wobei die in der gesamten Beschreibung enthaltenen Offenbarungen sinngemäß auf Teile und Merkmale mit gleichen Bezugszeichen übertragen werden können. Lageangaben wie z.B. "oben", "unten", "seitlich", "vertikal", "horizontal", etc. sind auf die unmittelbar beschriebenen Figuren bezogen und bei einer Lageänderung sinngemäß auf die neue Lage zu übertragen.

Ferner ist zu beachten, dass Richtungsangaben und Orientierungen zugrunde gelegt wurden, die sich grundsätzlich in der (Intra-) Logistik üblichen Bezeichnungen anlehnen. Folglich wird die Längsrichtung (Förderrichtung) mit "X", die Tiefe (Breite) mit "Z" und die (vertikale) Höhe mit "Y" bezeichnet. Den Figuren kann jeweils ein korrespondierendes (kartesisches) Koordinatensystem X, Y, Z entnommen werden.

## Patentansprüche

1. Belegt-Wippe (10) zur Anzeige eines Belegtzustands einer Staustrecke (14) für hängende Fördergüter (16), wobei die Staustrecke (14) stromabwärts an die Wippe (10) angrenzt, wobei eine Vielzahl von Fördergütern (16) aktiv oder passiv hängend stromabwärts transportiert, wobei jedes Fördergut (16) an einem Bügel (18) hängt, aufweisend:
ein Abfrage-Schwert (20) mit einem länglichen Körper (70), dessen Längserstreckung (76) ein erstes und ein gegenüberliegendes zweites Ende (72, 74) aufweist, wobei im Körper (70) eine durchgehende Öffnung (80) vorgesehen ist, die vorzugsweise näher zum zweiten Ende (74) als zum ersten freien Ende (74) angeordnet ist, wobei das Schwert (20) innerhalb eines Bereichs (52) angeordnet ist, der von den Fördergütern (16) durchquert wird, wenn die Fördergüter (16) die Wippe (10) passieren; und
ein Lager (26), das eine, vorzugsweise horizontal orientierte, Buchse (90) aufweist, die durch die Öffnung (80) des Schwerts (20) hindurch greift und auf der das Schwert (20) in einem Normalzustand, wenn das Schwert (20) nicht mit einem Bügel (18) in Kontakt ist, nach unten hängend aufliegt, wobei das Schwert (20) um die Buchse (90) schwenkbar gelagert ist, um im Belegtzustand durch ein gestautes Fördergut dauerhaft angehoben zu sein, wobei das Schwert (20) entlang der Längsrichtung (76) beabstandet verteilte, rippenförmige Schlitze (78) aufweist, die eine Anpassung einer Länge des Schwerts (20) durch Abbrechen eines unerwünschten Teils des Schwerts (20) zulassen.

2. Wippe nach Anspruch 1, die ferner eine Fahne (22) aufweist, die mit dem zweiten Ende (74) des Schwerts (20) verbunden ist und die das Schwert (20) in der Längsrichtung (76) fortsetzt.

3. Wippe nach Anspruch 2, wobei die Fahne (22) ein Langloch (50) aufweist, das sich entlang der Längsrichtung (76) des Schwerts (20) erstreckt.

4. Wippe nach einem der Ansprüche 1 bis 3, wobei das Schwert (20) oder die Fahne (22) eine, vorzugsweise kreisbogenförmige, Ausnehmung (48) aufweist, die koaxial zur Buchse (90) angeordnet ist.

5. Wippe nach einem der Ansprüche 1 bis 4, wobei das Schwert (20) oder die Fahne (22) ausgebildet ist, mit einem Näherungssensor (42) wechselzuwirken, der erfasst, ob das erste freie Ende (72) des Schwerts (20) aufgrund eines Kontakts mit einem stillstehenden Fördergut (16) dauerhaft nach oben ausgelenkt ist.

6. Wippe nach Anspruch 5, die ferner ein Gestell (38) aufweist, an dem der Näherungssensor (42) und das Lager (26) befestigt sind, wobei das Gestell (38) an der Staustrecke (14) befestigbar ist und wobei die Buchse (90) so angeordnet ist, dass das Schwert (20) seitlich, horizontal versetzt zur Staustrecke (14) angeordnet ist.

7. Wippe nach Anspruch 4 und 6, wobei ferner ein Stift (46), vorzugsweise in horizontaler Orientierung, quer, vorzugsweise senkrecht, zur Längsrichtung (X) der Staustrecke (14) am Gestell (38) ortsfest angebracht ist, der in die Ausnehmung (48) eingreift und der maximale Auslenkungen des Schwerts (20) begrenzt.

8. Wippe nach einem der Ansprüche 1 bis 7, wobei der Körper (70) des Schwerts (20) plattenförmig ausgebildet ist.

9. Hängeförderer (32, 60) mit einer Staustrecke (14), an deren stromaufwärtigem Ende, vorzugsweise seitlich, eine Belegt-Wippe (10) nach einem der Ansprüche 1 bis 8 vorgesehen ist.

## Claims

1. Occupied-rocker (10) for indicating an occupied state of an accumulation line (14) for hanging conveying goods (16), wherein the accumulation line (14) is arranged downstream adjacent to the rocker (10), wherein a plurality of conveying goods (16) is transported downstream actively, or passively, in a hanging state, wherein each of the conveying goods (16) hangs on a hanger (18), comprising:
an inquiry sword (20) having a long body (70), wherein a longitudinal extension (76) of the long body (70) comprises a first end (72) and an opposite second end (74), wherein a continuous opening (80) is provided in the body (74), the opening (80) preferably being arranged closer to the second end (74) than to the first free end (74), wherein the sword (20) is arranged within a region (52) which is crossed by the conveying goods (16) when the conveying goods (16) pass the rocker (10); and
a bearing (26) comprising a socket (90), which is preferably orientated horizontally, the socket (90) reaching through the opening (80) of the sword (20) and on which the sword (20), in a normal state when the sword (20) is not in contact with one of the hangers (18), is lying in a downwardly hanging manner, and wherein the sword (20) is supported pivotally about the socket (90) for being lifted permanently into the occupied state by means of an accumulated conveying good, wherein the sword (20) comprises rib-like slots (78), which are distributed along the longitudinal direction (76) at distances and which allow adaption of a length of the sword (20) by breaking off an undesired part of the sword (20).

2. The rocker of claim 1, further comprising a lug (22) which is connected to the second end (74) of the sword (20) and which continues the sword (20) in the longitudinal direction (76).

3. The rocker of claim 2, wherein the lug (22) has a slotted hole (50) extending along the longitudinal direction (76) of the sword (20).

4. The rocker of any of the claims 1 to 3, wherein the sword (20) or the lug (22) comprises a, preferably circular-arc, recess (48) being arranged coaxially relative to the socket (90).

5. The rocker of one of the claims 1 to 4, wherein the sword (20) or the lug (22) is formed to interact with a proximity sensor (42) which detects whether the first free end (72) of the sword (20) is lifted upward permanently due to a contact with a standstill conveying good (16).

6. The rocker of claim 5 further comprising a frame (38) to which to the proximity sensor (42) and the bearing (26) are mounted, wherein the frame (38) can be mounted to the accumulation line (14), and wherein the socket (90) is arranged such that the sword (20) is arranged laterally and horizontally displaced relative to the accumulation line (14).

7. The rocker of claim 4 and 6, wherein further a pin (46), preferably in a horizontal orientation, is stationary fixed to the frame (38) transversely relative to the longitudinal direction (X) of the accumulation line (14), wherein the pin (46) engages the recess (48) and limits maximum deflections of the sword (20).

8. The rocker of one of the claims 1 to 7, wherein the body (70) of the sword (20) is formed like a plate.

9. An overhead conveyor (32, 60) having an accumulation line (14) provided, preferably laterally, with a rocker (10) of one of the claims 1 to 9 at an upstream end of the accumulation line (14).

## Revendications

1. Bascule de détection d'occupation (10) pour indiquer l'état d'occupation d'une section d'accumulation (14) pour des produits transportés suspendus (16), la section d'accumulation (14) étant adjacente à la bascule (10) dans le sens aval, une pluralité de produits transportés (16) étant transportés activement ou passivement de manière suspendue dans le sens aval, chaque produit transporté (16) étant suspendu à un cintre (18), présentant :
une barre d'interrogation (20) avec un corps oblong (70) dont l'étendue longitudinale (76) présente une première et une deuxième extrémité opposée (72, 74), une ouverture traversante (80) étant prévue dans le corps (70), laquelle est de préférence disposée plus près de la deuxième extrémité (74) que de la première extrémité libre (72), la barre (20) étant disposée à l'intérieur d'une région (52) qui est traversée par les produits transportés (16) lorsque les produits transportés (16) passent par la bascule (10) ; et
un palier (26) qui présente une douille (90) de préférence orientée horizontalement, laquelle s'engage à travers l'ouverture (80) de la barre (20) et sur laquelle la barre (20), dans un état normal, lorsque la barre (20) n'est pas en contact avec un cintre (18), repose de manière suspendue vers le bas, la barre (20) étant supportée de manière à pouvoir pivoter autour de la douille (90), afin d'être soulevée de manière durable dans l'état d'occupation par un produit transporté accumulé, la barre (20) présentant des fentes (78) en forme d'ailettes réparties de manière espacée le long de la direction longitudinale (76), lesquelles permettent une adaptation d'une longueur de la barre (20) en cassant une partie indésirable de la barre (20).

2. Bascule selon la revendication 1, présentant en outre une languette (22) qui est connectée à la deuxième extrémité (74) de la barre (20) et qui prolonge la barre (20) dans la direction longitudinale (76).

3. Bascule selon la revendication 2, dans laquelle la languette (22) présente un trou oblong (50) qui s'étend le long de la direction longitudinale (76) de la barre (20).

4. Bascule selon l'une quelconque des revendications 1 à 3, dans laquelle la barre (20) ou la languette (22) présente un évidement (48) de préférence en forme d'arc de cercle qui est disposé coaxialement par rapport à la douille (90).

5. Bascule selon l'une quelconque des revendications 1 à 4, dans laquelle la barre (20) ou la languette (22) est réalisée de manière à coopérer avec un capteur de proximité (42) qui détecte si la première extrémité libre (72) de la barre (20) est déviée vers le haut de manière durable sous l'effet d'un contact avec un produit transporté immobile (16).

6. Bascule selon la revendication 5, qui présente en outre un bâti (38) sur lequel sont fixés le capteur de proximité (42) et le palier (26), le bâti (38) pouvant être fixé sur la section d'accumulation (14) et la douille (90) étant disposée de telle sorte que la barre (20) soit disposée latéralement de manière décalée horizontalement par rapport à la section d'accumulation (14).

7. Bascule selon les revendications 4 et 6, dans laquelle en outre une goupille (46) est montée fixement sur le bâti (38), de préférence dans une orientation horizontale, transversalement, de préférence perpendiculairement, à la direction longitudinale (X) de la section d'accumulation (14), laquelle vient en prise dans l'évidement (48) et limite les déviations maximales de la barre (20).

8. Bascule selon l'une quelconque des revendications 1 à 7, dans laquelle le corps (70) de la barre (20) est réalisé en forme de plaque.

9. Transporteur suspendu (32, 60) comprenant une section d'accumulation (14) au niveau de l'extrémité amont de laquelle est prévue, de préférence latéralement, une bascule de détection d'occupation (10) selon l'une quelconque des revendications 1 à 8.
